# EUROPEAN PATENT SPECIFICATION

(11) **EP 2 549 602 B1**
(45) Date of publication and mention of the grant of the patent: **31.01.2018**
(21) Application number: 11755992.2
(22) Date of filing: 07.02.2011
(51) Int. Cl.: H02G 3/04, B60R 16/02, H01B 7/00, H01B 13/012

(54) **WIRE HARNESS AND A METHOD FOR PRODUCING SAME**
KABELBAUM UND HERSTELLUNGSVERFAHREN DAFÜR
FAISCEAU DE FILS ET PROCÉDÉ DE PRODUCTION ASSOCIÉ

(30) Priority: 16.03.2010 JP 2010059112
(43) Date of publication of application: 23.01.2013
(73) Proprietor: Yazaki Corporation, Minato-ku Tokyo 108-8333 (JP)
(72) Inventor: TOYAMA, Eiichi, Kosai-shi Shizuoka 431-0431 (JP); HASHIZAWA, Shigemi, Kosai-shi Shizuoka 431-0431 (JP); OGA, Tatsuya, Kosai-shi Shizuoka 431-0431 (JP); ICHIKAWA, Hidehiro, Kosai-shi Shizuoka 431-0431 (JP)
(74) Representative: Grünecker Patent- und Rechtsanwälte PartG mbB
(86) International application number: PCT/JP2011/052511
(87) International publication number: WO 2011/114802

(56) References cited:
- WO-A1-2012/011431
- WO-A1-2012/086686
- JP-A- 2003 191 756
- JP-A- 2010 047 033
- US-A1- 2010 043 225

## Description

### [Technical Field]

This invention relates to a wire harness configured to be wired in a vehicle, and a method for making the wire harness.

### [Background Art]

A wire harness disclosed in the after-mentioned PTL 1 is provided with a plurality of non-shield electric wires, and a shield pipe that is metallic pipe member. The plurality of non-shield electric wires is entirely inserted into the shield pipe (that is, the pipe member) to be electromagnetically shielded, and is externally protected as well.

### [Citation List]

### [Patent Literature]

[PTL 1]
Japanese Patent Application Laid-Open Publication No. 2004-171952.

Further prior art is known from documents US 2010/043 225 A1 and JP 2003 191 756 A. JP 2003191756 A discloses a wire harness comprising a harness main body and a pipe member for passing therethrough and protecting the harness main body, the pipe member being formed into such a cross-sectional shape that a length in a direction nearly perpendicular to the under floor is arranged smaller than a length in a direction nearly parallel to the under floor within a range of at least an entirety or a part of the under floor, wherein the harness main body includes a plurality of high-voltage electric wires.

### [Summary of Invention]

### [Technical Problem]

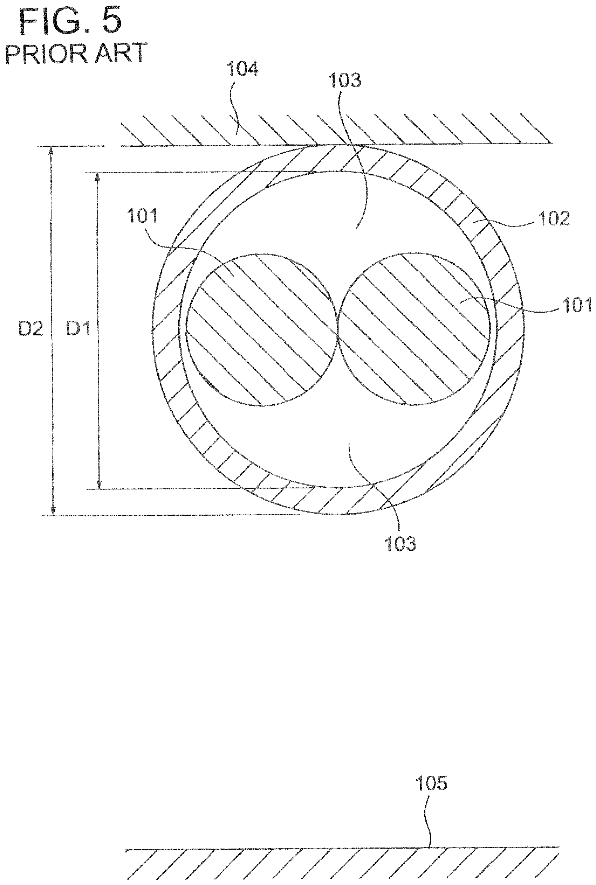

When electric wire is accommodated plurally in a pipe member formed in a circular cross-sectional shape, a degree the electric wire occupies in the pipe member, i.e., occupancy may be reduced according to its number of the accommodated electric wires. For example, when accommodating two of the electric wires as shown in FIG. 5, a pipe member 102 with its inner diameter D1 twice or more larger than a diameter of the electric wire 101 is required to prepare, and at this time a large space 103 as shown in the figure is formed, possibly causing reduction of the occupancy. The reduction of the occupancy may induce drawback of swing of the electric wire 101 within the pipe member 102, and of adverse effect for a long reliability of the electric wire 101.

In addition to the above, in view of a case for wiring the wire harness in an under floor 104 of a vehicle, with the aforementioned pipe member 102, because of its outer diameter D2 nearly approaching the ground 105, concerns may be raised subject to damage from such flying stones, steps or obstacles, and in a similar fashion of the above, adverse effect for a long reliability of the electric wire 101 may be induced.

The present invention is made in view of the aforementioned concerns, and thereby an object of the invention is to provide a wire harness capable of improving the occupancy in the pipe member, and of being wired such as to recede from the ground, and method for making the wire harness.

### [Solution to Problem] [

The object is solved by the subject-matter of claim 1 and claim 2.

### [Advantageous Effects of Invention]

According to the invention of the first aspect, the fact that the cross-sectional shape of the pipe member is characterized brings results that the occupancy of the pipe member is remarkably enhanced, compared with that of conventional occupancy. Also, it brings results that it is made possible to wire such as to recede as much as possible from the ground. Namely, the above results mean possibility to lower the pipe member. According to the present invention, possibility to prevent swing of the high-voltage electrically conductive path within the pipe member, and to reduce damage from such flying stones, steps or obstacles brings results to secure the long reliability of the high-voltage electrically conductive path. Upon forming the cross-section of the pipe such that its length in the direction perpendicular to the under floor is arranged smaller than that parallel to the under floor in the present invention, the results are brought that when wiring is designed for the entirety of the pipe member, it is made possible to lower the pipe as well as to enhance its occupancy. Also, the results are brought that when wiring is designed for the part of the pipe member, it is made possible to lower the pipe in the necessary part.

According to the present invention of the second aspect, the results are brought that it is made possible to provide the method effective for manufacturing the wire harness involving the above results relevant to the present invention.

According to the present invention relevant to the first or second aspect, forming the pipe member into a non-circular cross-sectional shape brings results that it is made possible to reduce raw materials of the pipe member, comparing with a circular shape. The present invention brings results that forming the pipe member into a non-circular cross-sectional shape can provide the wire harness having better pipe member and the method for making the wire harness.

### [Brief Description of Drawings]

[Fig. 1A]

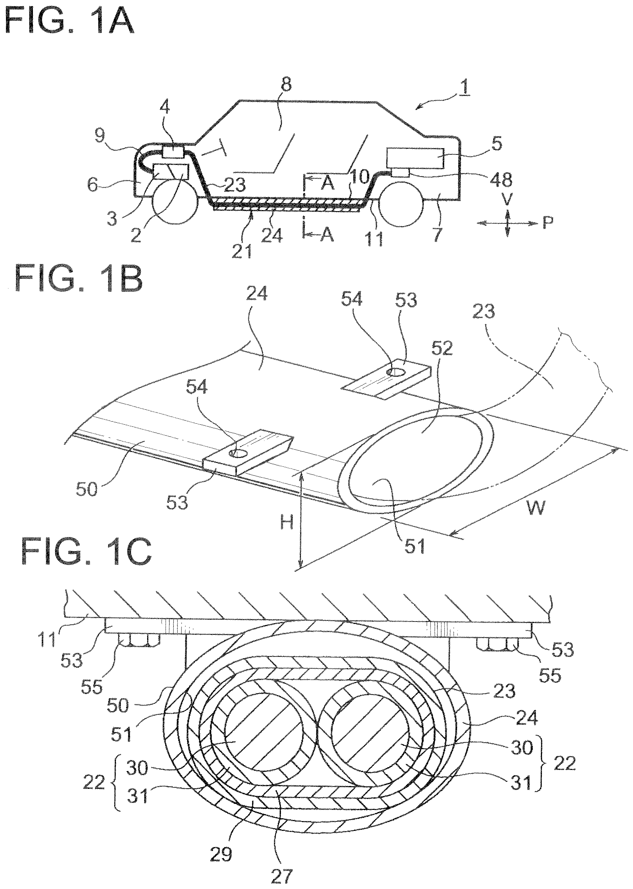

   FIG. 1A is a view illustrating an automobile including a wire harness of the present invention.
[Fig. 1B]
   FIG. 1B is a perspective view illustrating a rear side of the pipe member.
[Fig. 1C]
   FIG. 1C is a cross-sectional view taken from A-A line.
[Fig. 2]

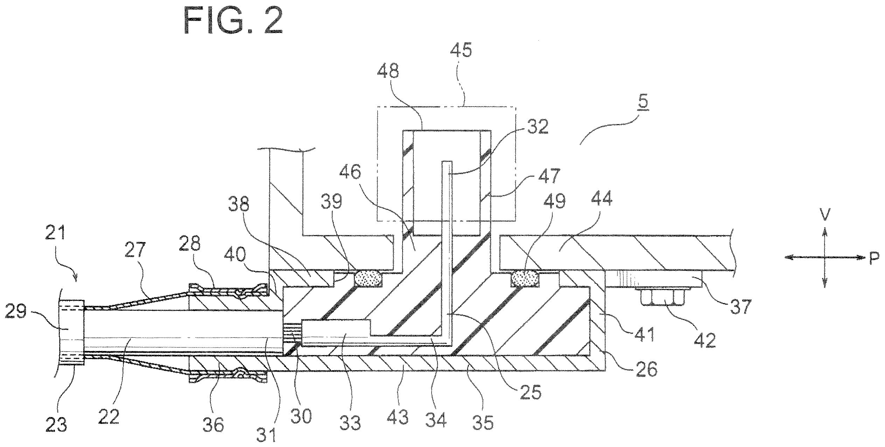

   FIG. 2 is a cross-sectional view illustrating a structure of a terminal of the wire harness.
[Fig. 3A]

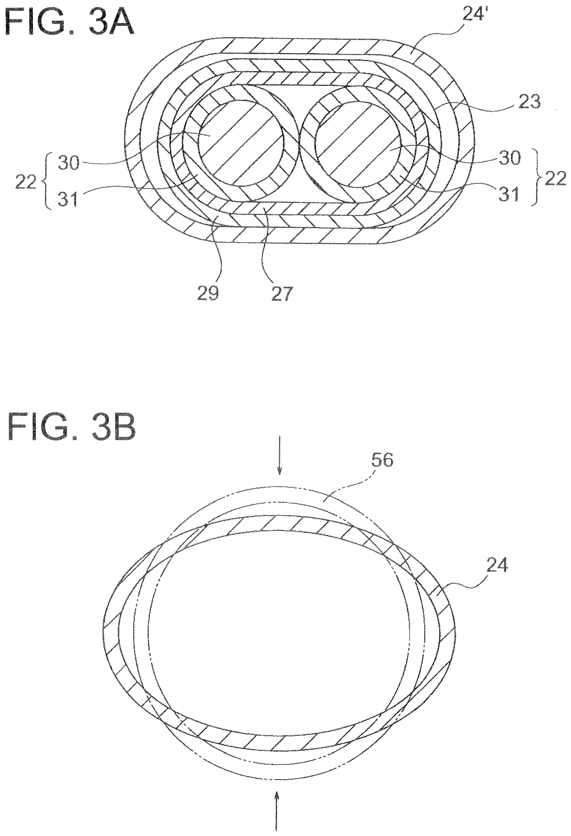

   FIG. 3A is a cross-sectional view illustrating another example of the pipe member.
[Fig. 3B]
   FIG. 3B is a cross-sectional view illustrating another example of the pipe member.
[Fig. 4A]

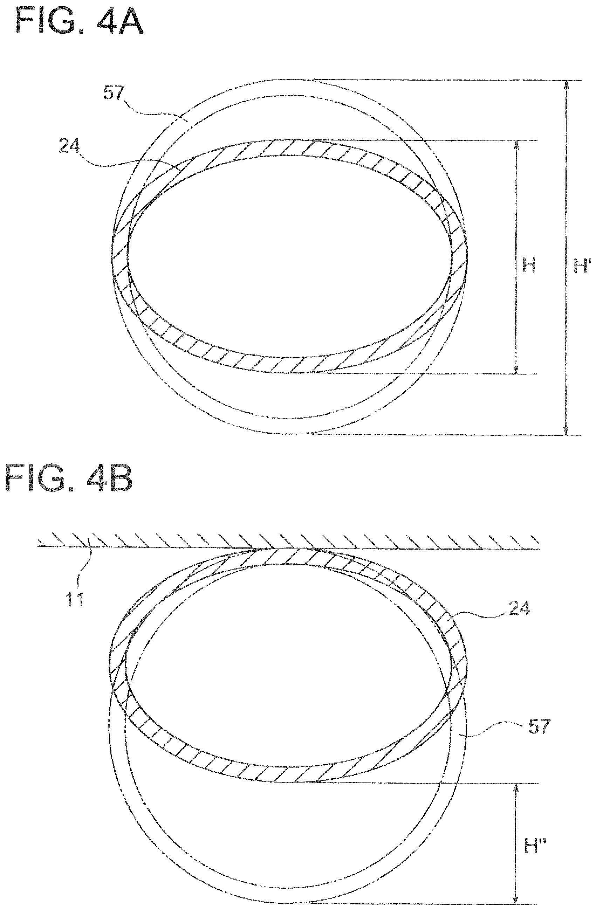

   FIG. 4A is a cross-sectional view comparing the pipe member with a circular pipe.
[Fig. 4B]
   FIG. 4B is a cross-sectional view comparing the pipe member with the circular pipe.
[Fig. 5]
   FIG. 5 is a cross-sectional view of a conventional pipe member.

### [Description of Embodiments]

A wire harness is provided with a high-voltage electrically conductive path, and a cross-sectional non-circular pipe member passing and protecting the high-voltage electrically conductive path. The wire harness is wired in an under floor of a vehicle. Alternatively, the wire harness is wired in predetermined position in the vehicle including the under floor.

Hereinafter, an embodiment will be discussed with reference to the drawings. FIG. 1A shows a view of the vehicle including the wire harness of the present invention, FIG. 1B a perspective view of a rear side of the pipe member, FIG. 1C a cross-sectional view taken from A-A line in FIG. 1A. Also, FIG. 2 shows a cross-sectional view of a structure of a terminal of the wire harness.

The wire harness of the present embodiment is what is wired in a hybrid vehicle or an electric vehicle, and will be discussed hereinafter, given an example of the hybrid vehicle (with the electric vehicle, its components, a structure, results of the present invention are basically the same).

In FIG. 1 the reference sign 1 indicates the hybrid vehicle. The hybrid vehicle 1 is the one that is driven, combined with two motivities of an engine 2 and a motor 3, which the motor 3 is supplied power from a battery 5 (a battery pack) via an inverter 4. The engine 2, the motor 3, and the inverter 4 are mounted in an engine room 6 that is in the present embodiment located where such front wheels exist. Also, the battery 5 is mounted in a rear side 7 of the vehicle where such rear wheels exist (the engine room 6 is occasionally mounted in a vehicle room 8 that exists back the engine room 6).

The motor 3 and the inverter 4 are connected to each other with a motor cable 9. Also, the battery 5 and the inverter 4 are connected to each other with a wire harness 21 relevant to the present invention. The wire harness 21 is wired from the engine room 6 to an under floor 11 that is located at the ground side of a vehicle floor 10, and from the under floor 11 to the rear side 7 of the vehicle. The wire harness 21 is wired straightly along the under floor 11.

Herein, additionally discussing the present embodiment, the motor 3 is designed to include a motor and a generator. Also, the inverter 4 is designed to include an inverter and a convertor. The inverter 4 is made as an inverter assembly, which is designed to include e.g., an air conditioner convertor, a generator inverter, or motor inverter. The battery 5 is a type of Ni-MH or Li-ion, which is formed in a module type. It should be noted that it is possible to employ a storage device such as capacitor. The battery 5, if usable for the hybrid vehicle 1 or the electric vehicle, may not be specifically limited.

The wire harness 21 is configured by a shielded harness main body 23 having a thick high-voltage electric wire 22 (that is, a high-voltage electrically conductive path) electrically connecting the inverter 4 and the battery 5, and a pipe member 24 disposed where wiring is designed in at least the vehicle floor 10 across the shielded harness main body 23. In the present embodiment, an electromagnetic shield feature is added, but not limited to, the harness main body 23 (this will be discussed later).

In FIGS. 1A to 1C, and 2, the harness main body 23 is configured by a plurality of high-voltage electric wires 22, a connection member 25 disposed at one end of the high-voltage electric wires 22, and is arranged as an electrically connecting part with such the battery 5 side (that is, a mating connector), a terminal fixing member 26 made of electrically conductive metallic material, a tubular metal foil member 27 (a shield member) disposed so as to cover the plurality of high-voltage electric wires 22, a ring-like metal swaging member 28 that is disposed outside a terminal of the tubular metal foil member 27 and is swaged, and an electric wire protecting member 29 entirely protecting a part destined to be protected in the plurality of high-voltage electric wires 22 which is covered by the tubular metal foil member 27. It should be noted that the other end of the high-voltage electric wire 22 is arranged in the same way as the one end thereof.

Two of the plurality of high-voltage electric wires 22 are disposed in the present embodiment (the number may be one example of the embodiment, and note that it may include a low-voltage electric wire) to be wired laterally (that is, wired so as to be arranged along the under floor 11) . The high-voltage electric wire 22 is made of thick electric wire, the core conductive body 30 of which is made of copper, copper alloy or aluminum. The high-voltage electric wire 22 is made of a non-shielded electric wire, and is composed of the above core electrically conductive body 30, and a cover 31 disposed outside the core conductive body 30. The aforementioned one end of the high-voltage electric wire 22 is formed to protrude straightly by predetermined length to expose.

The core conductive body 30 may be formed into either such a conductive structure that element wires are braided, or such a rod-like conductive structure shaped rectangular or circular in cross-section (e.g., a conductive structure of single flat core or single circular core) . Also, the high-voltage electric wire 22 may be substituted by a bus bar. The core conductive body 30 is connected with a connection member 25.

It should be noted that while the present embodiment employs, but is not limited to, the high-voltage electric wire 22 that is composed of insulating electric wire, a high-voltage shielded wire may be employed (that is, the high-voltage electrically conductive path). The shield electric wire is composed of a core conductive body, an insulating body disposed outside the core conductive body, a shield member disposed outside the insulating body, and a sheath disposed outside the shield member. The shield member is made of braid or metal foil.

In FIG. 2, the aforementioned connection member 25 is a connection part that is electrically connected with the battery 5 side as mentioned above (that is, a mating connector), a tip of which is formed in a terminal shape, i.e., nearly a tab shape. The connection member 25 includes an electric contact 32 positioned at the tip side, an electric connection part 33 to be connected with the conductive body 30 with crimping, and a middle part 34 connecting the electric contact 32 and the electric connection part 33. The electric contact 32 is bent so as to become perpendicular to the middle part 34. The connection member 25 is entirely bent in nearly an L-shape. The connection member 25 is brought into electric connection in a perpendicular direction shown by the arrow V in the figure.

The aforementioned terminal fixing member 26 is the one for fixing terminals of the plurality of high-voltage electric wires 22 and the connection member 25 at a predetermined position at the battery 5 side, and in the present embodiment, is as mentioned above formed of metallic material with electric conductivity. The terminal fixing member 26 in the present embodiment is provided with a frame 35, a tubular connection part 36, and a fixing flange 27.

The frame 35 includes an opening 39 at its upper wall 38. Also, the tubular connection part 36 is formed continuous with a position of its side wall 40 so as to communicate with inside the frame 35. On the other side wall 41 other than the side wall 40, a fixing flange 37 is formed continuous with and in conformity with the upper wall 38. The fixing flange 37 is formed as a part tightened by a bolt 42. The terminal fixing member 26 in the present embodiment is formed so as to be fixed to the battery 5 side by the bolt 42. Note that specifically not illustrated, the fixing flange 37 is formed with two positions. The upper wall 38 is formed as a part to contact the battery 5 side. The upper wall 38 serves as a part of grounding.

A bottom wall 43 of the frame 35 is formed flat and parallel to a bottom wall 44 of the battery 5 side. In a state of fixing the terminal fixing member 26 to the battery 5 side, the tubular connection part 36 is also formed parallel to the bottom wall 44. Because of the bottom wall 44 lying along a horizontal direction shown by the arrow P in the figure the tubular connection part 36 is formed to extend in this direction. Note that the reference sign 45 indicates a battery side connector with dashed line. The horizontal direction of the arrow P corresponds to the parallel direction of the under floor 11.

The tubular connection part 36 is formed so as to pass the tubular metal foil member 27 therethrough. Also, the tubular connection part 36 is formed to electrically and mechanically connect the tubular metal foil 27 by swaging a ring-like swaging member 28. The tubular connection part 36 in the present embodiment is formed in a rectangular cross-sectional shape. The tubular portion 36 is formed continuous with the frame 35, and thus made of metal and has electric conductivity. Note that the tubular connection part 36 may be formed as known shield shell, and connected with the frame 35 with any fixing member such as bolt.

The aforementioned tubular metal foil member 27 is a member that is formed of electrically conductive metal foil, and serves as electromagnetic shield for electromagnetic measures. As one example for metal foil composing the tubular metal foil member 27, preferably given is copper foil (it may be natural to select known metal foil other than copper foil) . The tubular metal foil member 27 in the present embodiment is made of single metal foil, and may also be folded two or three times.

Note that it should be understood to further enhance strength of the tubular metal foil member 27 by including one metal foil in a plurality of layers. It is in this case preferable to stack in laminae a resin sheet on a metal foil (a copper foil) via adhesive layer. For the resin sheet, a PET sheet may be given as one example. Over the metal foil (reverse side of the resin sheet), tin may be coated. The tubular metal foil member 27, in the present embodiment, is disposed as a member for adding electromagnetic shield feature to the harness main body 23, which is but optional if an after-mentioned pipe member 24 serves as the electromagnetic shield feature.

A terminal part of the tubular metal foil member 27 is configured to electrically and mechanically connect with the tubular connection part 36 by swaging the ring-like swaging member 28.

The aforementioned ring-like swaging member 28 is a member that is deformed permanently by swaging (pressing) with a not-shown swaging mold, and is formed for example through pressing process in which a strip-like metal thin plate is rounded off into an oval shape. The ring-like swaging member 28 is disposed outside the terminal of the tubular metal foil member 27.

The terminal portion of the tubular metal foil member 27 is electrically and mechanically connected with a tubular connection part by swaging the ring-like swaging member 28, and thereby the plurality of high-voltage electric wire 22 (the cover 31) accommodated into the tubular metal foil member 27 is arranged parallel to the bottom wall 44. Note that for the high-voltage electric wire 22, a cab tire cable may, but is not limited to this, be employed. The tubular metal foil member 27 electrically that is connected with the tubular connection part 36 is grounded to the battery 5 side via the terminal fixing member 26.

The connection member 25 disposed at en end of the high-voltage electric wire 22, when the connection member 25 is accommodated into the frame 35, is configured to be fixed by the housing 46 that is made of insulating resin material. In the housing 46 a connector engaging part 47 projecting from the opening 39 of the upper wall 38 upwardly is formed, to an inner space of which the electric contact 32 of the connection member 25 is exposed. Forming the housing 46 makes this part serve as the connector 48.

Note that a method for forming the housing 45 may not be specified herein. It may be preferred, for example, to form such as to integrate a resin sub housing with the connection member 25, followed by filing a space inside between the sub housing and the frame 35 with resin by such potting.

The housing 46 is provided with a waterproof packing 49 (it is optional to dispose of it).

The aforementioned electric wire protecting member 29 is a member that entirely protects the part destined to be protected of the plurality of high-voltage electric wire 22 covered with the tubular metal foil member 27 as mentioned above, and is configure to be wound with what is like a sheet in the present embodiment to use. The electric wire protecting member 29 may be substituted by for example a corrugated tube. The electric wire protecting member 29 may be optionally disposed.

In FIGS. 1A, 1B and 1C, the aforementioned pipe member 24 is a tubular member that passes through and protects the harness main body 23 including the high-voltage electric wire 22, and in the present embodiment, is disposed where wiring of the harness main body 23 is designed in the vehicle floor 10. Specifically, the pipe member 24 is disposed in conformity with the harness main body 23 adapted to be wired in the under floor 11 (the pipe member 24 may be extended , but not specifically limited, to the engine room 6 or the vehicle rear part 7). The pipe member 24 is formed in such a cross-sectional shape that a length H in a direction nearly perpendicular to the under floor (perpendicular length shown by the arrow V) is arranged smaller than a length W (H<W) in a direction nearly parallel to the under floor (parallel direction shown by the arrow P). Namely, the pipe member 24 is formed such that the length W in the direction perpendicular to the aforementioned floor surface is arranged smaller than the length W in the direction parallel to the aforementioned floor surface and perpendicular to a longitudinal direction of the high-voltage electric wire 22. The pipe member 24 in the present embodiment is formed in an ellipse cross-sectional shape. Note that it is also preferable that a known circular pipe is formed in part in a ellipse cross sectional shape, which part is arranged as the pipe member 24 (pressing the circular pipe 56 is a effective method for forming in part into a ellipse cross-sectional shape as mentioned below) . While the ellipse cross-sectional shape is one example, other example such a non-circular shape will be discussed below.

The pipe member 24 may be made of any metal or synthetic resin, and with the present embodiment, made of metal. For the pipe member 24, a material is employed for its outer surface 50 side with good heat dissipation and for its inner surface 51 with good endothermic to the high-voltage electric wire 22 (specifically not limited to materials, but preferable example will be mentioned later) . The pipe member 24 serves as such heat dissipation to outside, thermal barrier from outside, and protection of the electric wire. Onto the inner surface 51 of the pipe member 24 the harness main body 23 is abutted by its weight (the high-voltage electric wire 22 is indirectly abutted) . The pipe member 24 in the present embodiment is formed by injection molding (injection molding is one example, and pressing will be mentioned below).

The pipe member 24 is the non-circular ellipse pipe as mentioned above, and is formed to extend straightly. An edge of the opening 52 disposed at both ends of the pipe member 24 is provided with an edge cover member (not shown) covering its edge. The edge cover member is disposed as a nearly cap-like member for preventing damage of the harness main body 23 (it is possible not to dispose the edge cover member if no edge is induced).

As fixing member for fixing the pipe member 24 to the under floor 11, for example a bracket 53 is given as one example, which is disposed plurally at a predetermined position of the outer surface 50. The bracket 53 is fixed, e.g., by welding, and has a through hole 54 for bolt fixing. The reference sign 55 indicates a bolt to be passed through the through hole 54. Note that not limited to bolt fixing, it is also preferable to fix by clipping. As other fixing member, such a reversed Ω-shaped cramp as to engage with the outer surface 50 of the pipe member 24 to hold, or a band may be also preferred. The pipe member 24 also has water discharging hole besides the aforementioned fixing member (not shown, and forming of the water discharging hole is optional).

Herein, a case of the pipe member 24 being made of metal will additionally be discussed. It is needless to say that the pipe member 24, when made of metal, is enhanced of protection performance more than is made of resin. As materials, upon its being made of metal, aluminum is given as one example in light of protection performance or its weight. Also, stainless is given as one preferable example in light of protection performance or weather resistance. Herein it is made of aluminum.

Note that the pipe member 24 is ellipse shaped in cross-section, but not limited to this. For example, as shown in FIG. 3A, it is also preferable to be oval-shaped (the pipe member 24'), or not-shown oblong-shaped. These shapes involve advantage of enhancing contact area for the harness main body 23. Also, the pipe member 24 is formed extending straightly in the present embodiment, but not limited to this. For example, it is preferred to be bent at any position to change its passage. Furthermore, while the pipe member 24 is formed by injection molding, a circular pipe 56 as shown in FIG. 3B may be pressed to be ellipse-shaped in cross-section. Pressing may preferably be made at any necessary part or entirety of the circular pipe 56 (that is, lowering entirely or in only necessary part). Furthermore, while the pipe member 24 in the present embodiment is elongated one, it is also preferred to joint a plurality of short ones with any joint means.

With regard to accommodating of the pipe member 24, or the harness main body 23 (the plurality of high-voltage electric wires), such methods are given that a non-circular cross-sectional pipe member 24 is preliminarily provided, and through which the harness main body is passed, or that the harness main body 23 are inserted into the aforementioned circular pipe 56, which is then formed in a non-circular cross-sectional shape by pressing. Any methods are effective and are selected in view of such workability (e.g., comparing workability for insertion, the latter works effective when its passage is not straight, but needs to bend at any position).

In the aforementioned configuration or structure, accommodating the harness main body 23 into the non-circular cross-sectional pipe member 24 and fixing the pipe member 24 to the under floor 11 in the vehicle floor 10 makes the harness main body 23 wired along the under floor 11. Also, electrically connecting the plurality of high-voltage electric wires 22 with such the battery 5 side via the connection member 25 makes entirely wiring of the wire harness 21 completed.

The pipe member 24, upon compared with a similar-size circular pipe 57 as shown in FIG. 4A (that is, with larger diameter than that of circular pipe of FIG. 3B), is made such that at least the length H in the direction nearly perpendicular to the under floor is made smaller than the length H' of the pipe 57 (that is, H<H'). Also, taken from the figure, it is made possible for the pipe member 24 to save weight or reduce of material for use more than the circular pipe 57 (comparing the circular pipe 56, 57, it is made possible to reduce by about 10 percent). Moreover, comparing with the under floor 11, it is made possible for the pipe member 24 to recede from the ground further than the circular pipe 57 by the length H".

Therefore, having characteristics of the cross-sectional shape of the pipe member 24 makes the occupancy of the harness main body 23 in the pipe member 24 remarkably enhanced further than conventional one. Also, wiring such as to recede from the not-shown ground as mush as possible makes the pipe member 24 lower. Thereby it is made possible to prevent swing of the harness main body 23 in the pipe member 24, and secure long reliability of the harness main body 23 and the high-voltage electric wire 22 due to reduction of damage from, e.g., any flying stones, steps or obstacles.

Besides the above, since the pipe member 24 is capable of being bent in after process, it is made possible to reduce cost for molding. Also, changing of bending allows other vehicle to employ, enhancing its versatility. Furthermore, it is made possible to quickly correspond to design changes.

Since the pipe member 24 allows the harness main body 23 to abut onto the inner surface 51, it is made possible to conduct heat induced from the wire harness 23 to the under floor 11 side of the vehicle floor 10 via the pipe member 24. Also, it is made possible to dissipate the heat induced within the harness main body 23 from the outer surface 50 of the pipe member 24. Namely, abutting onto the inner surface 51 of the pipe member 24 makes temperature of the harness main body decrease.

The pipe member 24 in the present embodiment has such a length as to dispose where wiring is designed, and thereby it is made possible to save working space of packing.

### [Reference Signs List]

1 hybrid vehicle
2 engine
3 motor
4 inverter
5 battery
6 engine room
7 vehicle rear side
8 vehicle room
9 motor cable
10 vehicle floor
11 under floor
21 wire harness
22 high-voltage electric wire (high-voltage electrically conductive path)
23 harness main body
24 pipe member
25 connection member
26 terminal fixing member
27 tubular metal foil member (shield member)
28 ring-like swaging member
29 electric wire protecting member
30 core conductive body
31 cover
32 electric contact
33 electric wire connection part
34 middle part
35 frame
36 tubular connection part
37 fixing flange
38 upper wall
39 opening
40, 41 side wall
42 bolt
43, 44 bottom wall
45 connector
46 housing
47 connector engaging part
48 connector
49 packing
50 outer surface
51 inner surface
52 opening
53 bracket
54 through hole
55 bolt
56, 57 circular pipe

## Claims

1. A wire harness (21) configured to be wired in an under floor (11) of a vehicle, the wire harness (21) comprising:
a harness main body (23); and
a pipe member (24) for passing therethrough and protecting the harness main body (23), the pipe member (24) being formed into such a cross-sectional shape that a length (H) in a direction nearly perpendicular to the under floor (11) is arranged smaller than a length (W) in a direction nearly parallel to the under floor (11) within a range of at least an entirety or a part of the under floor (11), wherein
the harness main body (23) includes a plurality of high-voltage electric wires (22), a tubular metal foil member (27) disposed so as to cover the plurality of high-voltage electric wires (22), and an electric wire protecting member (29) entirely protecting a part destined to be protected in the plurality of high-voltage electric wires (22) which is covered by the tubular metal foil member (27).

2. A method for making a wire harness (21) according to claim 1, configured to be wired in an under floor (11) of a vehicle, the method comprising the steps selected from:
(a) providing a pipe member (24) formed into such a cross-sectional shape that a length (H) in a direction nearly perpendicular to the under floor (11) is arranged smaller than a length (W) in a direction nearly parallel to the under floor (11) within a range of at least an entirety or a part of the under floor (11), and passing a harness main body (23) through the pipe member (24); and
(b) providing a pipe member (24), passing the harness main body (23) therethrough, and subsequently forming the pipe member (24) into such a cross-sectional shape that a length (H) in a direction nearly perpendicular to the under floor (11) is arranged smaller than a length (W) in a direction nearly parallel to the under floor (11) within a range of at least an entirety or a part of the under floor (11).

## Patentansprüche

1. Kabelbaum (21), der so ausgeführt ist, dass er in einem Unterboden (11) eines Fahrzeugs verlegt wird, wobei der Kabelbaum (21) umfasst:
einen Kabelbaum-Hauptkörper (23); und
ein Rohrelement (24) zum Hindurchführen und Schützen des Kabelbaum-Hauptkörpers (23), wobei das Rohrelement (24) in einer Querschnittsform ausgebildet ist, durch die innerhalb eines Bereiches wenigstens des gesamten Unterbodens (11) oder eines Teils desselben eine Länge (H) in einer Richtung nahezu senkrecht zu dem Unterboden (11) kleiner ist als eine Länge (W) in einer Richtung nahezu parallel zu dem Unterboden (11), und
der Kabelbaum-Hauptkörper (23) eine Vielzahl von Hochspannungsleitern (22), ein röhrenförmiges Metallfolienelement (27), das so angeordnet ist, dass es die Vielzahl von Hochspannungsleitern (22) abdeckt, und ein Leiter-Schutzelement (29) enthält, das einen zu schützenden Teil der Vielzahl von Hochspannungsleitern (22), der durch das röhrenförmige Metallfolienelement (27) abgedeckt wird, vollständig schützt.

2. Verfahren zum Herstellen eines Kabelbaums (21) nach Anspruch 1, der so ausgeführt ist, dass er in einem Unterboden (11) eines Fahrzeugs verlegt wird, wobei das Verfahren die Schritte umfasst, die ausgewählt werden aus:
a) Bereitstellen eines Rohrelementes (24), das in einer Querschnittsform ausgebildet ist, durch die innerhalb eines Bereiches wenigstens des gesamten Unterbodens (11) oder eines Teils desselben eine Länge (H) in einer Richtung nahezu senkrecht zu dem Unterboden (11) kleiner ist als eine Länge (W) in einer Richtung nahezu parallel zu dem Unterboden (11), und Hindurchführen eines Kabelbaum-Hauptkörpers (23) durch das Rohrelement (24); und
b) Bereitstellen eines Rohrelementes (24), Hindurchführen des Kabelbaum-Hauptkörpers (23) durch dieses und anschließend Bringen des Rohrelementes (24) in eine Querschnittsform, durch die innerhalb eines Bereiches wenigstens des gesamten Unterbodens (11) oder eines Teils desselben eine Länge (H) in einer Richtung nahezu senkrecht zu dem Unterboden (11) kleiner ist als eine Länge (W) in einer Richtung nahezu parallel zu dem Unterboden (11).

## Revendications

1. Faisceau de fils (21) configuré pour être câblé dans le plancher (11) d'un véhicule, le faisceau de fils (21) comprenant:
un corps principal de faisceau (23); et
un élément de tuyau (24) pour le traverser et protéger le corps principal de faisceau (23),
l'élément de tuyau (24) étant en forme en section transversale telle qu'une longueur (H) dans une direction presque perpendiculaire au plancher (11) est agencée plus petite qu'une longueur (W) dans une direction presque parallèle au plancher (11) dans une plage correspondant au moins à la totalité ou une partie du plancher (11), dans lequel
le corps principal de faisceau (23) comprend une pluralité de fils électriques haute tension (22), un élément de feuille métallique tubulaire (27) disposé de manière à recouvrir la pluralité des fils électriques haute tension (22), et un élément de protection de fil électrique (29) protégeant entièrement une partie devant être protégée dans la pluralité de fils électriques haute tension (22) recouverte par l'élément de feuille métallique tubulaire (27).

2. Procédé de fabrication d'un faisceau de fils (21) selon la revendication 1, configuré pour être câblé dans le plancher (11) d'un véhicule, le procédé comprenant les étapes choisies parmi:
(a) la fourniture d'un élément de tuyau (24) étant en forme en section transversale telle qu'une longueur (H) dans une direction presque perpendiculaire au plancher (11) est agencée plus petite qu'une longueur (W) dans une direction presque parallèle au plancher (11) dans une plage correspondant au moins à la totalité ou une partie du plancher (11), et le passage d'un corps principal de faisceau (23) à travers l'élément de tuyau (24); et
(b) la fourniture d'un élément de tuyau (24), le passage du corps principal de faisceau (23) à travers celui-ci, et ensuite la formation de l'élément de tuyau (24) pour obtenir une forme de section transversale telle qu'une longueur (H) dans une direction presque perpendiculaire au plancher (11) est disposée plus petite qu'une longueur (W) dans une direction presque parallèle au plancher (11) dans une plage d'au moins une totalité ou une partie du plancher (11).
